# EUROPEAN PATENT APPLICATION

(11) **EP 4 108 740 A1**
(43) Date of publication of application: **28.12.2022**
(21) Application number: 21180826.6
(22) Date of filing: 22.06.2021
(51) Int. Cl.: C10G 3/00, C10G 9/36, C25B 1/04, B01D 53/14, C10G 69/04

(54) **AN INTEGRATED PROCESS AND INTEGRATED SYSTEM FOR OBTAINING CHEMICALS FROM RENEWABLE ORGANIC MATERIAL BY HYDROTREATMENT**

(71) Applicant: Borealis AG, 1020 Vienna (AT)
(72) Inventor: OUNI, Tuomas, 06850 Kulloo (FI); REGUILLO CARMONA, Rebeca, 4021 Linz (AT)
(74) Representative: Maikowski & Ninnemann Patentanwälte Partnerschaft mbB

(57) **Abstract**

The present invention relates to an integrated process for obtaining chemicals from renewable organic material (100) by hydrotreatment comprising the steps of feeding the renewable organic material (101) into at least one pre-treatment unit (102) for removing any material (117) not suitable as feedstock for subsequent hydrotreatment, feeding the pre-treated organic material from the at least one pre-treatment unit (102) to at least one hydrotreatment unit (103) for providing gas-oil like hydrocarbons (107) from the pre-treated organic material in the presence of hydrogen and a catalyst, feeding the gas-oil like hydrocarbons (107) from the at least one hydrotreatment unit (103) into at least one steam cracker furnace unit (108) for thermal cracking for providing a cracked product mixture (109); feeding the cracked product mixture (109) into at least one steam cracker fractionation unit (110) for separating the cracked product mixture into high value chemicals (111), in particular ethylene, propylene, butadiene and BTX aromatics, hydrogen (112), fuel gas (113) and fuel oil (114), wherein at least part of the hydrogen (112) from the at least one steam cracker fractionation unit (110) is recycled back to the at least one hydrotreatment unit (103).

## Description

The present invention relates to an integrated process for obtaining chemicals from renewable organic material by hydrotreatment and an integrated system for carrying out such a process.

### Description

Raw materials of biological origin are potential sources for various biofuel gases and biofuel oils. The organic raw material can be converted to biofuels by feeding it through a catalytic reactor and contacting it with hydrogen (hydrotreatment process). The resulting product can be further fractionated to provide different biofuel components and chemicals.

WO2012069706 A2 describes the preparation of fuels from bio-oils. This includes purifying the organic raw material and hydroprocessing the purified organic material to form a mixture of hydrocarbon compounds, separating gaseous compounds from the mixture of hydrocarbon compounds to form liquid hydrocarbon compounds and fractionating the mixture to obtain the fuel components.

WO2020016410 A1 describes a method of purifying recycled or renewable organic material to obtain a purified hydrotreated recycled or renewable organic material with a reduced amount of silicon content and phosphorous content. For this purpose the organic material is pre-heated in the presence of an acid and further heat treated in the presence of an adsorbent before it undergoes a catalytic hydrotreatment.

Renewable organic material can also be used for providing monomers for polymer synthesis. Thus, the use of organic raw material as renewable feedstock is an effective way to reduce carbon footprint of polymers. Introduction of renewable content is with today's technologies most effectively done by using renewable feedstock in existing steam cracker, where monomers for polymer production are produced.

One approach is disclosed in WO2016184893. Here a method is disclosed wherein isomeric raw material from a renewable feedstock is obtained by deoxygenation, hydrodeoxygenation, hydrotreatment or hydrocracking. The isomeric raw material undergoes thermal cracking to produce biohydrocarbons at a temperature of at most 825 °C. The biohydrocarbons can further be polymerized to obtain bio-polymers such as polypropylene, polyethylene or polyethylene terephthalate.

Optimal feedstock for a steam cracker are paraffinic hydrocarbons. Main constituents of biomass are cellulose, hemicellulose and lignin. Conversion of these constituents into paraffinic feedstock is both very energy intensive and technically challenging. A specific biomass fraction of triglycerides or fatty acids has molecular structure close to paraffinic hydrocarbons and require relatively simple hydroconversion for processing into paraffinic hydrocarbons.

Refining triglycerides or fatty acids, originally in form of vegetable oils, animal fats or crude tall oil, into quality that is feasible to subject to hydroconversion requires energy. Hydroconversion on the other hand requires significant amounts of hydrogen. Production of such energy and hydrogen in conventional way from fossil raw materials leads to considerable fossil CO₂ emissions. Furthermore, capital and operational cost of production for hydrogen has a negative effect on the profitability of hydroconversion.

It is thus an object of the present invention to provide a process for obtaining high value chemicals that can be used for polymer synthesis from renewable organic material with reduced CO₂ emission and reduced overall costs.

This object is being solved by providing an integrated process for obtaining chemicals from renewable organic material by hydrotreatment with the features of claim 1.

Accordingly, an integrated process for obtaining chemicals from renewable organic material by hydrotreatment is provided, wherein the process comprises the steps of
- Feeding the renewable organic material into at least one pre-treatment unit for removing any material not suitable as feedstock for subsequent hydrotreatment,
- Feeding the pre-treated organic material from the at least one pre-treatment unit to at least one hydrotreatment unit for providing gas-oil like hydrocarbons from the pre-treated organic material in the presence of hydrogen and a catalyst,
- Feeding the gas-oil like hydrocarbons from the at least one hydrotreatment unit into at least one steam cracker furnace unit for thermal cracking for providing a cracked product mixture, in particular a cracked product mixture of cracked long-chain, paraffinic hydrocarbons;
- Feeding the cracked product mixture into at least one steam cracker fractionation unit for separating the cracked product mixture into high value chemicals, in particular ethylene, propylene, butadiene and BTX aromatics, hydrogen, fuel gas and fuel oil,
- wherein at least part of the hydrogen from the at least one steam cracker fractionation unit is recycled back to the at least one hydrotreatment unit.

Thus, an integrated process and system is provided wherein the hydrogen for hydrotreatment is obtained from product streams of steam cracking of renewable feedstock, and furthermore energy required for feedstock pre-treatment and processing is produced from renewable residue streams coming from different process steps. This allows to reduce fossil CO₂ emissions and energy and thus to reduce costs.

As will be described in further detail below the present process comprises hydrotreatment of (pre-treated) vegetable oils or fats, such as crude tall oil, using hydrogen generated in steam cracking of the hydrogenated product. Energy is provided for the hydrogenation and steam cracking from incineration of biogenic by-products of the process. Additional hydrogen for the hydrotreatment is provided using electrolysis with renewable electricity. Water produced in hydrotreatment of oils and fats as feedstock is used for electrolysis. CO₂ from incineration of biogenic by-products is captured to reach carbon-negative concept. All non-chemical and non-fuel co-products from steam cracking are cracked further into chemicals to maximise chemicals output. Thus, the concept of the present process allows a conversion of biogenic oils and fats into chemicals with zero or negative fossil carbon footprint.

The present process provides a fully mass and energy integrated solution for conversion of bio-oils into chemicals. The inputs in the system are bio-oil, water and renewable electricity and the outputs are captured biogenic CO₂ and renewable chemicals. The carbon footprint of the process is zero or negative depending on the calculation method. The present process can be implemented with maximal utilisation of existing assets to reduce capital requirements.

### Organic material

In an embodiment of the present process the renewable organic material that is used as feedstock are plant based fats and oils, in particular vegetable oil, animal-based fats and oils and/or fish oil.

Suitable feedstock include byproducts of the KRAFT process of wood pulp manufacture such as crude tall oil (CTO), tall oil pitch (TOP), or crude fatty acids (CFA), tall oil fatty acids (TOFA) and distilled tall oil (DTO). Tall oil comprises resin acids, fatty acids and unsaponifiables. Resin acids are a mixture of organic acids derived from terpenes, examples include abietic acid. The main fatty acids in tall oil are oleic, linoleic and palmitic acids.

### Pre-treatment

In the pre-treatment process of the organic material, any material that is not suitable as feedstock for hydrotreatment is removed. This includes in particular the removal of metals, phospholipids, heavy pitch or gum and other solids.

The pre-treatment unit may be configured as a reactor comprising guard beds that may be active or inactive. An active guard bed may contain activated aluminum oxide and purifying catalyst. The organic material is preferably heated, but not pressurised.

In the course of the pre-treatment process both solid and solvated impurities of the feedstock are retained.

The heavy fraction containing the impurities may be separated from the purified feed by means of distillation, in particular steam distillation or vacuum distillation. In case of steam distillation, the material containing the impurities is fed to the distillation tower, to which steam generated in the power plant is introduced.

In case of vacuum distillation, the material containing the impurities is fed to the distillation column, which is under a vacuum, or significantly less than atmospheric pressure of 760 millimeters of mercury (mmHg).

The energy required for the pre-treatment unit is obtained from a power plant. In a preferred embodiment, the power plant is integrated into the whole process and system scheme and is described in further detail below.

The power plant may use biogenic material as fuel, for example material removed from feedstock in pre-treatment unit. Thus, in preferred embodiment of the present process the material removed from the at least one pre-treatment unit is fed as fuel supply to at least one power plant.

### Hvdrotreatment (HDT)

The pre-treated organic material from the at least one pre-treatment unit is subsequently fed into the at least one hydrotreatment unit. Here the pre-treated organic material is converted into gas-oil like hydrocarbons in the presence of hydrogen and a catalyst and energy. This allows for catalytically removing oxygen and saturating olefinic double bonds for providing gasoil-like hydrocarbons.

As mentioned above, at least one part of the hydrogen required for the hydrotreatment process is recycled from the at least one steam cracker fractionation unit arranged further downstream.

Another part of the hydrogen required for the hydrotreatment process may be provided from an electrolyser that is integrated into the process and system scheme and is described in further detail below.

Any excess of hydrogen may be used in the steam cracker fractionation unit that is arranged further downstream. Thus, in an embodiment of the present process any excess hydrogen which has not been consumed during hydrotreatment of the organic material in the at least one hydrotreatment unit is fed into the at least one steam cracker fractionation unit.

The catalyst used in the hydrotreatment process may be supported Pd, Pt, Ni, NiW, NiMo or CoMo on support zeolite, zeolite-alumina, alumina, silica, preferably NiW/Al₂O₃, NiMo/Al₂O₃, CoMo/Al₂O₃.

The hydrotreatmnet process is carried out at a temperature between 270-380°C, preferably 275-360°C, more preferably 300-350°C and a pressure between 4-20 MPa at a continuous hydrogen flow H2/feed ratio from 500-2000 n-L/L, preferably from 800-1400 n-L/L.

The energy required for the hydrotreatment unit is obtained from a power plant, preferably from an integrated power plant.

### Electrolyser

As mentioned previously, at least a part of the hydrogen required for hydrotreatment of the pre-treated organic material in the hydrotreatment unit may be provided by at least one electrolyser.

The oxygen released by the at least one electrolyser may be at least partially transferred to the at least one power plant. In particular, the oxygen from electrolyser is send to the power plant to replace air, in order to concentrate CO₂ in the power plant flue gas. This will help and support CO₂ capture from the power plant flue gas.

It is also possible that at least part of oxygen released by the electrolyser is used in the cracker furnace.

The water required by the electrolyser may be water released during the hydrotreatment of the organic material in the at least one hydrotreatment unit. In addition to the water released during the hydrotreatment of the organic material in the at least one hydrotreatment unit further water from an external source may be introduced into the at least one electrolyser. Thus, water of HDT is used as feedstock for the electrolyser.

The electricity required to operate the electrolyser will be preferably from renewable sources (solar, wind or water energy).

### Steam cracker furnace

The products, in particular the gas-oil like hydrocarbons from the at least one hydrotreatment unit are sent into the at least one steam cracker furnace unit for thermal cracking. The thermal cracking provides a product mixture of cracked long-chain, paraffinic hydrocarbon.

The feed is introduced in the convection section of the cracker furnace, which is designed with gas-gas heat exchangers, which are utilized to preheat the mixture of hydrocarbons and steam. The material is then fed to the coils . The coils are placed in the radiant section of the furnace because the radiant heat is recovered. This section is where the cracking reactions take place. Burners are arranged on the walls and on the floor of the firebox for indirect firing. Reaction temperature is around 850 °C. The reaction occurs rapidly: the residence time is on the order of milliseconds. Flow rates approach the speed of sound. After the cracking temperature has been reached, the gas is quenched rapidly in a transfer line heat exchanger or inside a quenching header to avoid further decomposition of the desired olefins. This is achieved by either indirect cooling using a quench exchanger or direct cooling by injecting quench oil into the gas effluent. The heat carried by the flue gas is recovered at the convection section of the furnace. This section consists of a series of "tube banks" where the heat is recovered for superheating steam, preheating the hydrocarbon feed, boiler feed water and dilution steam.

The energy that is required for the thermal cracking process in the cracking furnace may be supplied from fuel gas that is a product of steam cracking and separated in steam cracker fractionation unit arranged downstream.

### Steam cracker fractionation

The cracked product mixture from the cracking furnace is separated subsequently in the cracker fractionation unit.

The main products include: ethylene, propylene, butadiene and BTX aromatics (Benzene, Toluene, Xylene); hydrogen; fuel oil for power plant; fuel gas for steam cracker furnace.

As mentioned above at least part of the hydrogen is recycled to the hydrotreatment unit. The fuel gas from the at least one steam cracker fractionation unit is fed to the at least one steam cracker furnace unit. The fuel oil from the at least one steam cracker fractionation unit is fed to at least one power plant.

Any other steam cracker fractionation products are redirected / recycled to the steam cracking furnaces for further cracking and conversion.

The products are separated in a complex process involving several units and process conditions, such as cooling, compression, adsorption, drying, refrigeration, fractionation and selective hydrogenation.

The energy required by the cracker fractionation unit is provided by recovering heat from steam cracker furnace and by the integrated power plant.

### Power plant

It is preferred, if the present process uses at least part of the required process energy from an integrated power plant.

Thus, in an embodiment at least part of the energy required for the at least one pre-treatment unit, for the at least one hydrotreatment unit and for the at least one steam cracker fractionation unit is obtained from the at least one power plant.

The fuel supply for the power plant comprises renewable fuel oil separated in the steam cracker fractionation and/or material removed from feedstock in pre-treatment unit. Oxygen for enhancing combustion is preferably supplied from the electrolyser.

### CO₂ capture

In an embodiment of the present process CO₂ released from the at least one steam cracker furnace unit and CO₂ released from the at least one power plant is at least partially fed to at least one CO₂ capture unit.

The CO₂ capture unit may be configured as a compressor unit for CO₂ liquefaction. It may be an amine absorber.

In a more preferred embodiment, the present integrated process comprises the following steps:
- Feeding the renewable organic material into at least one pre-treatment unit for removing any material not suitable as feedstock for subsequent hydrotreatment,
   o wherein the material removed from the at least one pre-treatment unit is fed as fuel supply to at least one power plant;
- Feeding the pre-treated organic material from the at least one pre-treatment unit to at least one hydrotreatment unit for providing gas-oil like hydrocarbons from the pre-treated organic material in the presence of hydrogen and a catalyst,
   o wherein at least part of the hydrogen from at least one steam cracker fractionation unit is recycled back to the at least one hydrotreatment unit, and
   o wherein at least another part of the hydrogen required for hydrotreatment of the pre-treated organic material in the hydrotreatment unit is provided by at least one electrolyser using water released during the hydrotreatment of the organic material in the at least one hydrotreatment unit,
   o wherein the water released during the hydrotreatment of the organic material in the at least one hydrotreatment unit and optional further water from an external source is introduced into the at least one electrolyser;
- Feeding the gas-oil like hydrocarbons from the at least one hydrotreatment unit into at least one steam cracker furnace unit for thermal cracking for providing a cracked product mixture, in particular a mixture of cracked long-chain, paraffinic hydrocarbons;
- Feeding the cracked product mixture into at least one steam cracker fractionation unit for separating the cracked product mixture into high value chemicals, in particular ethylene, propylene, butadiene and BTX aromatics, hydrogen, fuel gas and fuel oil, wherein
   o the fuel gas from the at least one steam cracker fractionation unit is fed to the at least one steam cracker furnace unit,
   o the fuel oil from the at least one steam cracker fractionation unit is fed to at least one power plant, and
   o the hydrogen is recycled back to the at least one hydrotreatment unit.

In the most preferred embodiment, the present integrated process comprises the following steps:
- Feeding the renewable organic material into at least one pre-treatment unit for removing any material not suitable as feedstock for subsequent hydrotreatment,
   o wherein the material removed from the at least one pre-treatment unit is fed as fuel supply to at least one power plant;
- Feeding the pre-treated organic material from the at least one pre-treatment unit to at least one hydrotreatment unit for providing gas-oil like hydrocarbons from the pre-treated organic material in the presence of hydrogen and a catalyst,
   o wherein at least part of the hydrogen from at least one steam cracker fractionation unit is recycled back to the at least one hydrotreatment unit, and
   o wherein at least another part of the hydrogen required for hydrotreatment of the pre-treated organic material in the hydrotreatment unit is provided by at least one electrolyser using water released during the hydrotreatment of the organic material in the at least one hydrotreatment unit,
   o wherein the water released during the hydrotreatment of the organic material in the at least one hydrotreatment unit and optional further water from an external source is introduced into the at least one electrolyser;
- Feeding the gas-oil like hydrocarbons from the at least one hydrotreatment unit into at least one steam cracker furnace unit for thermal cracking for providing a cracked product mixture, in particular a mixture of cracked long-chain, paraffinic hydrocarbons;
- Feeding the cracked product mixture into at least one steam cracker fractionation unit for separating the cracked product mixture into high value chemicals, in particular ethylene, propylene, butadiene and BTX aromatics, hydrogen, fuel gas and fuel oil, wherein
   o the fuel gas from the at least one steam cracker fractionation unit is fed to the at least one steam cracker furnace unit,
   o the fuel oil from the at least one steam cracker fractionation unit is fed to at least one power plant, and
   o the hydrogen is recycled back to the at least one hydrotreatment unit,
- wherein CO₂ released from the at least one steam cracker furnace unit and CO₂ released from the at least one power plant is at least partially fed to at least one CO₂ capture unit.

The object of the present invention may also be solved by an integrated system for obtaining chemicals from renewable organic material by hydrotreatment in a process as described above. Such an integrated system comprises the following elements:
- at least one pre-treatment unit for removing any material from the renewable organic material that is not suitable as feedstock for subsequent hydrotreatment;
- at least one hydrotreatment unit arranged downstream from the at least one pre-treatment unit for providing gas-oil like hydrocarbons from the pre-treated organic material in the presence of hydrogen and a catalyst by hydrotreatment;
- at least one steam cracker furnace unit arranged downstream from the at least one hydrotreatment unit for thermal cracking for providing a cracked product mixture, in particular a mixture of cracked long-chain, paraffinic hydrocarbons;
- at least one steam cracker fractionation unit arranged downstream from the at least one steam cracker furnace unit for separating the cracked product mixture into high value chemicals, in particular ethylene, propylene, butadiene and BTX aromatics, hydrogen, fuel gas and fuel oil,
- wherein the at least one steam cracker fractionation unit is in fluid connection to the at least one hydrotreatment unit for recycling at least part of the hydrogen obtained during separation of the cracked product mixture in the steam cracking fractionation unit to the hydrotreatment unit.

In an embodiment the present systems comprises at least one electrolyser that is in fluid connection to or with the at least one hydrotreatment unit. The at least one electrolyser may receive water from the at least one hydrotreatment unit released during the hydrotreatment of the renewable organic material. It is also possible that water from an external source, in particular in addition to the water from the hydrotreatment unit is used in the electrolyser.

Furthermore, the at least one electrolyser provides at least part of the hydrogen to the at least one hydrotreatment unit for the hydrotreatment of the renewable organic material.

In yet a further embodiment the present systems comprises at least one power plant for providing energy to the at least one pre-treatment unit, the at least one hydrotreatment unit and for the at least one steam cracker fractionation unit.

In still another embodiment the present systems comprises at least one CO₂ capture unit for capturing CO₂ released from the at least one steam cracker furnace unit and/or for capturing CO₂ released from the at least one power plant.

In a further embodiment, a PSA unit may be provided separating hydrogen from steam cracker fractionation and hydrotreatment off-gas

In a preferred embodiment, the present integrated system comprises:
- at least one pre-treatment unit for removing any material from the renewable organic material that is not suitable as feedstock for subsequent hydrotreatment;
- at least one hydrotreatment unit arranged downstream from the at least one pre-treatment unit for providing gas-oil like hydrocarbons from the pre-treated organic material in the presence of hydrogen and a catalyst by hydrotreatment;
- at least one steam cracker furnace unit arranged downstream from the at least one hydrotreatment unit for thermal cracking for providing a cracked product mixture, in particular a mixture of cracked long-chain, paraffinic hydrocarbons;
- at least one steam cracker fractionation unit arranged downstream from the at least one steam cracker furnace unit for separating the cracked product mixture into high value chemicals, in particular ethylene, propylene, butadiene and BTX aromatics, hydrogen, fuel gas and fuel oil,
- wherein the at least one steam cracker fractionation unit is in fluid connection to the at least one hydrotreatment unit for recycling at least part of the hydrogen obtained during separation of the cracked product mixture in the steam cracking fractionation unit to the hydrotreatment unit,
- at least one power plant for providing energy to the at least one pre-treatment unit, the at least one hydrotreatment unit and for the at least one steam cracker fractionation unit, wherein the material removed from the at least one pre-treatment unit is fed as fuel supply to at least one power plant.

In a more preferred embodiment, the present integrated system comprises:
- at least one pre-treatment unit for removing any material from the renewable organic material that is not suitable as feedstock for subsequent hydrotreatment;
- at least one hydrotreatment unit arranged downstream from the at least one pre-treatment unit for providing gas-oil like hydrocarbons from the pre-treated organic material in the presence of hydrogen and a catalyst by hydrotreatment;
- at least one steam cracker furnace unit arranged downstream from the at least one hydrotreatment unit for thermal cracking for providing a cracked product mixture, in particular a mixture of cracked long-chain, paraffinic hydrocarbons;
- at least one steam cracker fractionation unit arranged downstream from the at least one steam cracker furnace unit for separating the cracked product mixture into high value chemicals, in particular ethylene, propylene, butadiene and BTX aromatics, hydrogen, fuel gas and fuel oil,
- wherein the at least one steam cracker fractionation unit is in fluid connection to the at least one hydrotreatment unit for recycling at least part of the hydrogen obtained during separation of the cracked product mixture in the steam cracking fractionation unit to the hydrotreatment unit,
- at least one power plant for providing energy to the at least one pre-treatment unit, the at least one hydrotreatment unit and for the at least one steam cracker fractionation unit, wherein the material removed from the at least one pre-treatment unit is fed as fuel supply to at least one power plant, and
- at least one electrolyser in fluid connection to the at least one hydrotreatment unit,
   a. wherein the at least one electrolyser receives water from the at least one hydrotreatment unit released during the hydrotreatment of the renewable organic material, and
   b. wherein the at least one electrolyser provides at least part of the hydrogen to the at least one hydrotreatment unit for the hydrotreatment of the renewable organic material.

In a most preferred embodiment, the present integrated system comprises:
- at least one pre-treatment unit for removing any material from the renewable organic material that is not suitable as feedstock for subsequent hydrotreatment;
- at least one hydrotreatment unit arranged downstream from the at least one pre-treatment unit for providing gas-oil like hydrocarbons from the pre-treated organic material in the presence of hydrogen and a catalyst by hydrotreatment;
- at least one steam cracker furnace unit arranged downstream from the at least one hydrotreatment unit for thermal cracking for providing a cracked product mixture, in particular a mixture of cracked long-chain, paraffinic hydrocarbons;
- at least one steam cracker fractionation unit arranged downstream from the at least one steam cracker furnace unit for separating the cracked product mixture into high value chemicals, in particular ethylene, propylene, butadiene and BTX aromatics, hydrogen, fuel gas and fuel oil,
- wherein the at least one steam cracker fractionation unit is in fluid connection to the at least one hydrotreatment unit for recycling at least part of the hydrogen obtained during separation of the cracked product mixture in the steam cracking fractionation unit to the hydrotreatment unit,
- at least one power plant for providing energy to the at least one pre-treatment unit, the at least one hydrotreatment unit and for the at least one steam cracker fractionation unit, wherein the material removed from the at least one pre-treatment unit is fed as fuel supply to at least one power plant,
- at least one electrolyser in fluid connection to the at least one hydrotreatment unit,
   c. wherein the at least one electrolyser receives water from the at least one hydrotreatment unit released during the hydrotreatment of the renewable organic material, and
   d. wherein the at least one electrolyser provides at least part of the hydrogen to the at least one hydrotreatment unit for the hydrotreatment of the renewable organic material, and

- at least one CO₂ capture unit for capturing CO₂ released from the at least one steam cracker furnace unit and/or for capturing CO₂ released from the at least one power plant.

The invention is further described in more detail by means of examples with reference to the figures. It shows:
- Figure 1: a scheme of a first embodiment of the present process and system;
- Figure 2: a scheme of a second embodiment of the present process and system, and
- Figure 3: the scheme of Figure 2 illustrating the mass flows and utility flows.

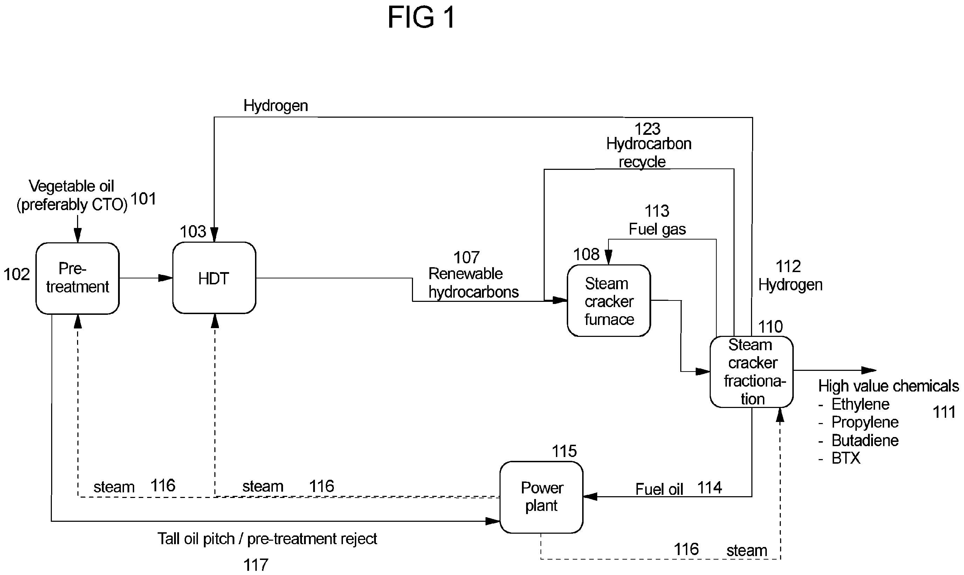

Figure 1 shows a schematic overview of a first variant of the present process.

Vegetable oil 101 is introduced into a pre-treatment unit 102, where any material not suitable as hydrotreatment feedstock is removed. Such material can include metals, phospholipids or heavy pitch or gums.

Energy required by pre-treatment unit 102 is supplied from integrated power plant (or steam boiler) 115 that uses biogenic material, including residues from said pre-treatment steps, as fuel.

The pre-treated bio-oil is fed into a hydrotreatment unit (HDT, 103), where hydrogen and energy is added to catalytically remove oxygen and saturate olefinic double bonds. Energy need of hydrotreatment is covered by steam coming from same power plant 115 that supplies energy for pre-treatment.

The main product of the hydrotreatment, renewable gasoil-like hydrocarbons 107, is fed into steam cracking furnace 108 for thermal cracking. Steam cracking furnace cracks long-chain, paraffinic hydrocarbons into a mixture of products that are separated from each other in fractionation part 110 of the steam cracker.

Energy for steam cracking furnace 108 is supplied by fuel gas 113 that is resulting from steam cracking fractionation reaction 110. Energy for fractionation 110 is supplied partly from recovering the heat from steam cracking product and partly from the same steam boiler 115 that supplies steam to pre-treatment and hydrotreatment. Renewable fuel oil 114, also a product of steam cracking fractionation 110 of renewable hydrocarbons, is used to complement the fuel supply in the power plant or steam boiler 115.

Hydrogen 112 is separated from cracker fuel gas and hydrotreatment off-gas with a PSA unit (not shown) and returned back to hydrotreatment 103.

The main chemical products 111 of steam cracking fractionation 110 of renewable hydrocarbons are ethylene, propylene, butadiene and BTX aromatics (Benzene, Toluene, Xylene). All these products have a material application (instead of fuel) and are main target and primary product of this concept.

Any other hydrocarbon product 123, besides fuel gas 113 and fuel oil 114 and chemical products 111, will be re-directed to steam cracking furnaces for further cracking and conversion into chemicals and renewable fuel gas, fuel oil and hydrogen.

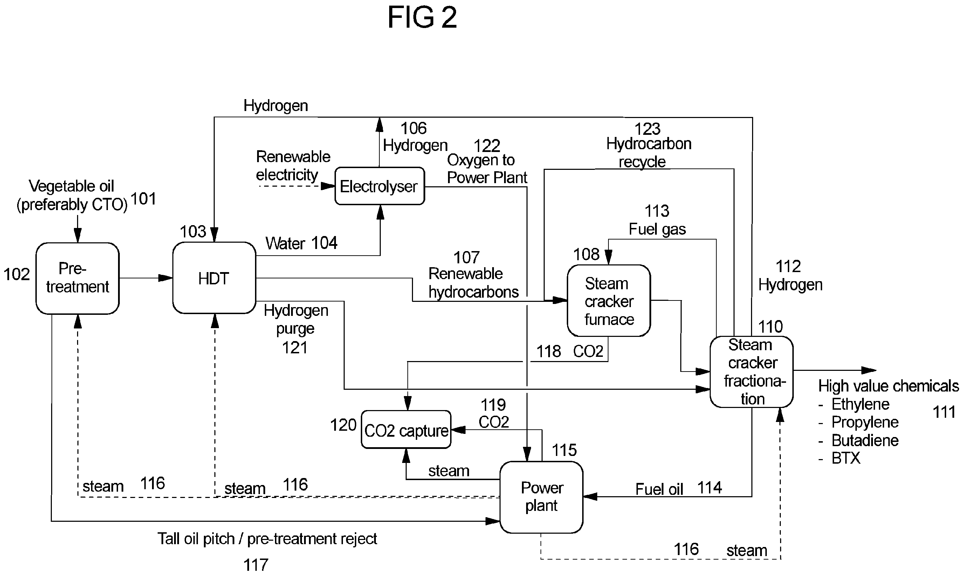

The process variant illustrated in Figure 2 includes additional steps and elements.

Since the hydrogen 112 from the steam cracker fractionation 110 is not enough to satisfy the needs of hydrotreatment unit 103, the hydrogen supply is complemented with an electrolyser 105 that uses renewable electricity and water 104 from bio-oil hydrotreatment 103 to produce hydrogen 106 and oxygen 122.

The oxygen product of the electrolyser 122 can be used in power plant / steam boiler 115 to enhance combustion of pre-treatment rejects and renewable fuel oil.

Replacement of air with oxygen in the power plant 115 will also concentrate carbon dioxide in the flue gas 119 from the power plant, making it more energy and capital efficient to capture that CO₂ in case a negative carbon footprint is desired for the concept. In case a CO₂ capture unit 120 is included, also flue gases 118 from steam cracking furnace 108 are processed in the CO₂ capture unit 120. Carbon capture unit 120 consists of an amine absorber and a compressor unit for CO₂ liquefaction.

Hydrotreatment process 103 typically requires a slight excess of hydrogen, and that hydrogen excess 121 is returned in the steam cracker, along with any light hydrocarbons resulting from possible side-reaction of hydrotreatment, into steam cracker for further utilisation.

The resulting scheme utilises existing steam cracker assets for production of renewable hydrocarbon. Only renewable energy and fuels are used to power the process, with an option to capture biogenic CO₂ for achieving negative CO₂ footprint for the products.

### Example

Typical composition of crude tall oil is presented in Anthonykutty, J. M., Linnekoski, J., Harlin, A., and Lehtonen, J.,Hydrotreating reactions of tall oils over commercial NiMo catalyst, Energy Science & Engineering, 2015. 3(4), 286-299).

The fraction consisting of 'neutrals', making 23% of the crude tall oil, are removed in pre-treatment step before hydrotreatment unit. The remaining 77% are hydrotreated for removal of oxygen and saturation of any double bonds.

Subjecting the hydrocarbon product mixture to steam cracking in a conventional liquid cracking furnace results in product mixture similar to one given by steam cracking of a paraffinic hydrocracker residue (see: Ullmann's ethylene page 17- HCR cracking yields).

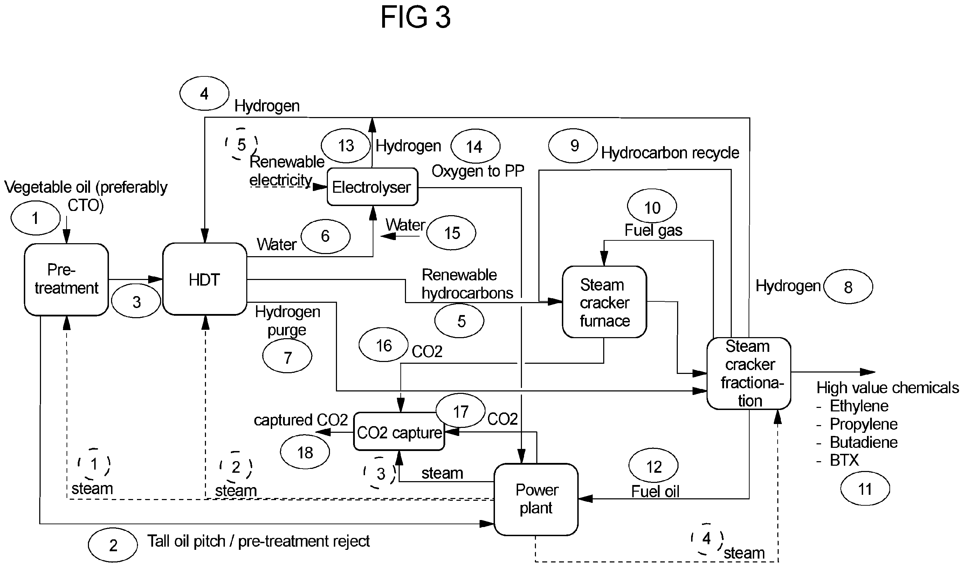

In the following tables 1 and 2 mass flows and utility flows of the process according to the invention are provided with reference to the scheme of Figure 3.

The results show that the process according to the invention allows for obtaining high value chemicals that can be used for polymer synthesis from renewable organic material with reduced CO₂ emission and reduced overall costs.

**Table 1: Mass flows**

| Mass flows | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 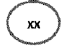 | CTO | Pitch | Tall Oil | Hydrogen | HC product | Reaction water | Hydrogen purge | Hydrogen recycle | HC recycle | Fuel gas | High value chemicals | Fuel Oil | Electrolyser Hydrogen | Electrolyser oxygen | Additional water input | Steam cracker CO2 | Power plant CO2 | Captured CO2 |
| CTO | 1000 | | | | | | | | | | | | | | | | | |
| Tall oil pitch | | 230 | | | | | | | | | | | | | | | | |
| Tall oil | | | 770 | | | | | | | | | | | | | | | |
| Hydrogen | | | | 28 | | | 2,5 | 8,5 | | | | | 19,2 | | | | | |
| Hydrocarbons | | | | | 705 | | | | 174,3 | | | | | | | | | |
| Water | | | | | | 96 | | | | | | | | | 77 | | | |
| Fuel gas | | | | | | | | | | 97,4 | | | | | | | | |
| High value chemicals | | | | | | | | | | | 531,7 | | | | | | | |
| Fuel oil | | | | | | | | | | | | 69,9 | | | | | | |
| Oxygen | | | | | | | | | | | | | | 154 | | | | |
| CO2 | | | | | | | | | | | | | | | | 267,9 | 1041,3 | 1309,2 |

**Table 2: Utility flows**

| Utility flows | 1...4 | 5 |
|---|---|---|
| 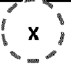 | Power plant steam | Eletrolyser electricity |
| Steam (40 barg) | 6425 | |
| Electricity kW | | 897 |
| | | |
| Steam enthalpy | 2,4 | MJ/kg |
| Fuel gas LHV | 50 | MJ/kg |
| Fuel oil LHV | 39,8 | MJ/kg |
| Tall oil pitch LHV | 40,6 | MJ/kg |

Finally the amount biogenic CO₂ can be calculated from incinerated fuels using conversion factors of 2.75 kgCO₂/tonne for fuel gas, 3.38 kgCO₂/tonne for fuel oil and 3.5 kgCO₂/tonne for tall oil pitch.

| | In | Out |
|---|---|---|
| CTO | 1000 kg | |
| Electricity | 897 kWh | |
| Water | 77 kg | |
| Chemicals | | 532 kg |
| CO2 (biogenic, captured) | | 1309 kg |

From the overall mass balance above it can be concluded that both the inputs and outputs of the concept are non-fossil and the fossil carbon footprint of the produced chemicals is zero or negative depending on the further use of the captured CO₂.

## Claims

1. An integrated process for obtaining chemicals from renewable organic material (100) by hydrotreatment, comprising the steps of
- feeding the renewable organic material (101) into at least one pre-treatment unit (102) for removing any material (117) not suitable as feedstock for subsequent hydrotreatment,
- feeding the pre-treated organic material from the at least one pre-treatment unit (102) to at least one hydrotreatment unit (103) for providing gas-oil like hydrocarbons (107) from the pre-treated organic material in the presence of hydrogen and a catalyst,
- feeding the gas-oil like hydrocarbons (107) from the at least one hydrotreatment unit (103) into at least one steam cracker furnace unit (108) for thermal cracking for providing a cracked product mixture (109);
- feeding the cracked product mixture (109) into at least one steam cracker fractionation unit (110) for separating the cracked product mixture into high value chemicals (111), in particular ethylene, propylene, butadiene and BTX aromatics, hydrogen (112), fuel gas (113) and fuel oil (114),
o wherein at least part of the hydrogen (112) from the at least one steam cracker fractionation unit (110) is recycled back to the at least one hydrotreatment unit (103).

2. Process according to claim 1, **characterized in that** the renewable organic material (100) are plant based fats and oils, in particular vegetable oil, tall oil, animal based fats and oils and/or fish oil.

3. Process according to one of the preceding claims, **characterized in that** the material (117) removed from the at least one pre-treatment unit (102) is fed as fuel supply to at least one power plant (115).

4. Process according to one of the preceding claims, **characterized in that** any excess hydrogen which has not been consumed during hydrotreatment of the organic material in the at least one hydrotreatment unit (103) is fed into the at least one steam cracker fractionation unit (110).

5. Process according to one of the preceding claims, **characterized in that** at least part of the hydrogen (106) required for hydrotreatment of the pre-treated organic material in the hydrotreatment unit (103) is provided by at least one electrolyser (105) using water (104) released during the hydrotreatment of the organic material in the at least one hydrotreatment unit (103).

6. Process according to claim 5, **characterized in that** in addition to the water released during the hydrotreatment of the organic material in the at least one hydrotreatment unit (103) further water from an external source is introduced into the at least one electrolyser (105).

7. Process according to one of the claims 5-6, **characterized in that** the oxygen (122) released by the at least one electrolyser (105) is at least partially transferred to the at least one power plant (115).

8. Process according to one of the preceding claims, **characterized in that** the fuel gas (113) from the at least one steam cracker fractionation unit (110) is fed to the at least one steam cracker furnace unit (108).

9. Process according to one of the preceding claims, **characterized in that** the fuel oil (114) from the at least one steam cracker fractionation unit (110) is fed to at least one power plant (115).

10. Process according to one of the preceding claims, **characterized in that** at least part of the energy (116) required for the at least one pre-treatment unit (102), for the at least one hydrotreatment unit (103) and for the at least one steam cracker fractionation unit (110) is obtained from at least one power plant (115).

11. Process according to one of the preceding claims, **characterized in that** CO₂ (118) released from the at least one steam cracker furnace unit (108) and CO₂ (119) released from the at least one power plant (115) is at least partially fed to at least one CO₂ capture unit (120).

12. An integrated system for obtaining chemicals from renewable organic material (100) by hydrotreatment in a process according to one of the preceding claims comprising
- at least one pre-treatment unit (102) for removing any material (117) from the renewable organic material (101) that is not suitable as feedstock for subsequent hydrotreatment;
- at least one hydrotreatment unit (103) arranged downstream from the at least one pre-treatment unit (102) for providing gas-oil like hydrocarbons (107) from the pre-treated organic material in the presence of hydrogen and a catalyst by hydrotreatment;
- at least one steam cracker furnace unit (108) arranged downstream from the at least one hydrotreatment unit (103) for thermal cracking for providing a cracked product mixture (109);
- at least one steam cracker fractionation unit (110) arranged downstream from the at least one steam cracker furnace unit (108) for separating the cracked product mixture into high value chemicals (111), in particular ethylene, propylene, butadiene and BTX aromatics, hydrogen (112), fuel gas (113) and fuel oil (114);
- wherein the at least one steam cracker fractionation unit (110) is in fluid connection to the at least one hydrotreatment unit (103) for recycling at least part of the hydrogen obtained during separation of the cracked product mixture in the steam cracking fractionation unit (110) to the hydrotreatment unit (103).

13. System according to claim 12, **characterized by** at least one electrolyser (105) in fluid connection to the at least one hydrotreatment unit (103),
a. wherein the at least one electrolyser (105) receives water (104) from the at least one hydrotreatment unit (103) released during the hydrotreatment of the renewable organic material (101), and
b. wherein the at least one electrolyser (105) provides at least part of the hydrogen (106) to the at least one hydrotreatment unit (103) for the hydrotreatment of the renewable organic material (101).

14. System according to one of claims 12-13, **characterized by** at least one power plant (115) for providing energy to the at least one pre-treatment unit (102), the at least one hydrotreatment unit (103) and for the at least one steam cracker fractionation unit (110).

15. System according to one of the claims 12-14, **characterized by** at least one CO₂ capture unit (120) for capturing CO₂ (118) released from the at least one steam cracker furnace unit (108) and/or for capturing CO₂ (119) released from the at least one power plant (115).
